# EUROPÄISCHE PATENTSCHRIFT

(11) **EP 3 163 399 B1**
(45) Veröffentlichungstag und Bekanntmachung des Hinweises auf die Patenterteilung: **28.11.2018**
(21) Anmeldenummer: 15191657.4
(22) Anmeldetag: 27.10.2015
(51) Int. Cl.: F24F 11/74, F24F 11/30, F24F 11/62, G05D 7/06

(54) **SYSTEM ZUR STEUERUNG UND/ODER ZUR REGELUNG EINES IN EINEM STRÖMUNGSKANAL EINER LUFTTECHNISCHEN ANLAGE, VORZUGSWEISE EINER LUFTTECHNISCHEN LABOR- ODER REINRAUMANLAGE, STRÖMENDEN VOLUMENSTROMS**
SYSTEM FOR CONTROLLING AND/OR REGULATING A VOLUME FLOW FLOWING IN A FLOW CHANNEL OF A VENTILATION SYSTEM, PREFERABLY A VENTILATION LABORATORY OR CLEAN ROOM SYSTEM
SYSTÈME DE COMMANDE ET/OU DE RÉGLAGE DU VOLUME D'AIR ÉCOULÉ DANS UN CANAL D'UNE INSTALLATION D'AÉRATION, DE PRÉFÉRENCE D'UNE INSTALLATION D'AÉRATION DE SALLE BLANCHE OU DE LABORATOIRE

(43) Veröffentlichungstag der Anmeldung: 03.05.2017
(73) Patentinhaber: TROX GmbH, 47506 Neukirchen-Vluyn (DE)
(72) Erfinder: Olders, Matthias, 47506 Neukirchen-Vluyn (DE); Lange, Stefan, 47506 Neukirchen-Vluyn (DE)
(74) Vertreter: Dr. Stark & Partner Patentanwälte mbB

(56) Entgegenhaltungen:
- WO-A1-02/02994
- US-A1- 2004 194 484
- US-A1- 2006 105 697
- SCHNEIDER ELEKTRONIK: "Bedienungs- und Montageanleitung Laborzugsregelung LMR-300", ANNOUNCEMENT SCHNEIDER ELEKTRONIK, XX, XX, 15. Januar 1999 (1999-01-15), XP002976646,

## Beschreibung

Die Erfindung betrifft ein System zur Steuerung und/oder zur Regelung eines in einem Strömungskanal einer lufttechnischen Anlage, vorzugsweise einer lufttechnischen Labor- oder Reinraumanlage, strömenden Volumenstroms durch Verstellung einer in dem Strömungskanal angeordneten Drosselklappe, wobei das System zumindest ein elektronisches Steuergerät und/oder zumindest einen elektronischen Regler, vorzugsweise einen elektronischen Volumenstromregler, sowie zumindest einen über eine Leitungsverbindung mit zumindest einem Steuergerät und/oder mit zumindest einem Regler verbundenen Antrieb aufweist, durch den die in dem Strömungskanal angeordnete Drosselklappe in ihrer Ausrichtung veränderbar ist.

Bei einem bekannten System wird beispielsweise mittels eines mit zwei in einem Strömungskanal befindlichen Messstellen verbundenen Differenzdrucksensors ein Differenzdruck bestimmt, der ein Maß für die Menge des in dem Strömungskanal strömenden Volumenstroms ist. Dieser Ist-Wert wird von dem Differenzdrucksensor an den elektronischen Regler weitergegeben, der wiederum den Antrieb ansteuert, der durch Veränderung der Stellung der Drosselklappe den Volumenstrom einstellt. In der Praxis sind Systeme zur Verwendung in einer klimatechnischen Anlagen bekannt, bei denen ein Volumenstromregler über ein Spannungssignal einen Antrieb analog oder gepulst ansteuert. Das ausgesandte Spannungssignal entspricht einer Position des Antriebs, so dass über die Spannungsstärke die Position des Antriebs und damit die Stellung einer Drosselklappe ansteuerbar ist. Sofern es sich um ein 6 ± 4 V Signal handelt, stellt das Spannungssignal ein Maß für die Geschwindigkeit des Antriebs dar. 6 V entspricht dabei dem stillstehenden Antrieb. Bei einer anderen Ausführungsform eines analog arbeitenden Systems werden über einen dem Volumenstromregler zugeordneten Schalter konstante Spannungssignale an den Antrieb ausgesandt, wobei der Antrieb einen Eingang für die Bewegung in die eine Drehrichtung und einen weiteren Eingang für die Bewegung in die entgegengesetzte Drehrichtung aufweist. Über die Einschaltzeit oder das Puls/Pausen-Verhältnis kann auf die Position des Antriebs und damit die Stellung der Drosselklappe geschlossen werden. Nachteilig bei allen Systemen ist, dass keine hinreichend genaue Ansteuerung des Antriebs möglich ist, so dass in Folge dessen eine Drosselklappe nicht hinreichend genau positioniert werden kann. Hinzukommt, dass immer dichter werdende Gebäudehüllen sowie Räume eine immer präziser ausregelnde Volumenstromeinstellung erfordern.
Die WO 02/02994 A1 beschreibt ein System und ein Verfahren zum Kontrollieren der Luftabsauggeschwindigkeit, insbesondere in einem Laborabzug. In der Bedienungs- und Montageanleitung für das Produkt "LABORABZUG-REGELUNG LMR-300" der SCHNEIDER Elektronik GmbH (Stand 15.01.1999) ist ein Regelungssystem für einen Laborabzug beschrieben. Die US 2004/0194484 A1 beschreibt eine Multizonen-Klimaanlage und die US 2006/0105697 A1 ein System zur Luftmengenregelung.
Aufgabe der Erfindung ist es, die vorgenannten Nachteile zu vermeiden und ein System anzugeben, das eine feinere Ansteuerung des Antriebs und damit eine genauere Einstellung einer durch den betreffenden Antrieb betätigbaren Drosselklappe ermöglicht.
Diese Aufgabe wird dadurch gelöst, dass zumindest einem mit zumindest einem Antrieb verbundenen Steuergerät und/oder zumindest einem mit zumindest einem Antrieb verbundenen Regler, ein Prozessor mit einer digital kommunizierenden Ausgangs- und/oder Eingangs-Schnittstelle zugeordnet ist und diesem mit dem Steuergerät und/oder mit dem Regler verbundenen Antrieb ein Prozessor mit einer digital kommunizierenden Eingangs- und/oder Ausgangs-Schnittstelle zugeordnet ist und dass die digital kommunizierende Ausgangs- und/oder Eingangs-Schnittstelle des Prozessors des Steuergeräts und/oder des Reglers und die digital kommunizierende Eingangs- und/oder Ausgangs-Schnittstelle des Prozessors wenigstens eines mit dem Steuergerät und/oder mit dem Regler verbundenen Antriebs für eine digitale Ansteuerung dieses Antriebs über den vollständigen Übertragungsweg miteinander digital gekoppelt sind.

Sofern das System zur Steuerung eines in einem Strömungskanal einer lufttechnischen Anlage, vorzugsweise einer lufttechnischen Labor- oder Reinraumanlage, strömenden Volumenstroms durch Verstellung einer in dem Strömungskanal angeordneten Drosselklappe ausgebildet ist, weist das System zumindest ein elektronisches Steuergerät sowie zumindest einen über eine Leitungsverbindung mit zumindest einem Steuergerät verbundenen Antrieb auf, durch den die in dem Strömungskanal angeordnete Drosselklappe in ihrer Ausrichtung veränderbar ist, wobei zumindest einem mit zumindest einem Antrieb verbundenen Steuergerät ein Prozessor mit einer digital kommunizierenden Ausgangs- und/oder Eingangs-Schnittstelle zugeordnet ist und diesem mit dem Steuergerät verbundenen Antrieb ein Prozessor mit einer digital kommunizierenden Eingangs- und/oder Ausgangs-Schnittstelle zugeordnet ist und wobei die digital kommunizierende Ausgangs- und/oder Eingangs-Schnittstelle des Prozessors des Steuergeräts und die digital kommunizierende Eingangs- und/oder Ausgangs-Schnittstelle des Prozessors wenigstens eines mit dem Steuergerät verbundenen Antriebs für eine digitale Ansteuerung dieses Antriebs über den vollständigen Übertragungsweg miteinander digital gekoppelt sind.

Sofern das System zur Regelung eines in einem Strömungskanal einer lufttechnischen Anlage, vorzugsweise einer lufttechnischen Labor- oder Reinraumanlage, strömenden Volumenstroms durch Verstellung einer in dem Strömungskanal angeordneten Drosselklappe ausgebildet ist, weist das System zumindest einen elektronischen Regler, vorzugsweise einen elektronischen Volumenstromregler, sowie zumindest einen über eine Leitungsverbindung mit zumindest einem Regler verbundenen Antrieb auf, durch den die in dem Strömungskanal angeordnete Drosselklappe in ihrer Ausrichtung veränderbar ist, wobei zumindest einem mit zumindest einem Antrieb verbundenen Regler ein Prozessor mit einer digital kommunizierenden Ausgangs- und/oder Eingangs-Schnittstelle zugeordnet ist und diesem mit dem Regler verbundenen Antrieb ein Prozessor mit einer digital kommunizierenden Eingangs- und/oder Ausgangs-Schnittstelle zugeordnet ist und wobei die digital kommunizierende Ausgangs- und/oder Eingangs-Schnittstelle des Prozessors des Reglers und die digital kommunizierende Eingangs- und/oder Ausgangs-Schnittstelle des Prozessors wenigstens eines mit dem Regler verbundenen Antriebs für eine digitale Ansteuerung dieses Antriebs über den vollständigen Übertragungsweg miteinander digital gekoppelt sind.

Sofern ein Regler keine Führungsgröße erhält, ist es auch denkbar, dass ein Regler zur Steuerung des Volumenstroms verwendet wird. Durch das erfindungsgemäße System können eine Vielzahl von Informationen ausgetauscht werden. Dies können beispielsweise Informationen über die Antriebsart, die Stellzyklen, das Drehmoment, den Soll-Wert und den Ist-Wert des Stellwinkels oder Alarm- und Informationsmeldungen sein. Letztere Informationen ermöglichen eine voreilende Wartung vor dem Eintritt eines Defekts beispielsweise beim Antrieb.

Während bei bekannten Systemen zur Ansteuerung analoge Spannungssignale übertragen werden, erfolgt bei der erfindungsgemäßen Ausgestaltung eine Ansteuerung mittels digitaler Signale. A/D-Wandler sowie D/A-Wandler, wie sie teilweise im Stand der Technik vorgesehen sind, sind nicht erforderlich. Der betreffende Antrieb erhält digitale Signale, so dass damit eine genauere Ansteuerung des Antriebs und damit eine feinere Einstellung der Drosselklappe möglich ist. Die digitale Ansteuerung bringt insoweit erhebliche Vorteile bei der Positionierung des Antriebs und damit bei der Einstellung eines Luftvolumenstroms mittels der durch den Antrieb betätigten Klappe. So erlaubt die digitale Ansteuerung eine sehr viel feinere Positionierung des Antriebes. Damit kann die Drosselklappe und daraus resultierend der Volumenstrom sehr viel präziser eingestellt werden, was mit den bekannten analog angesteuerten Antrieben nicht möglich ist. Bei bekannten analog angesteuerten Antrieben ist dies in der D/A- sowie A/D-Wandlung begründet, da es hier bei der Wandlung und Übertragung zu einer Spannungsverschleppung auf der Leitungsverbindung sowie zu Auflösungsproblemen des D/A-Wandlers und des A/D-Wandlers kommt. Der mittels des erfindungsgemäßen Systems sehr präzise einzustellende Antrieb bringt insbesondere in Laboren, Reinräumen oder sehr dichten Räumen neue Anwendungsfelder. In diesen Anwendungsgebieten wurde aufgrund der erforderlichen Regelgenauigkeit bisher nur pneumatische Volumenstromregelungen eingesetzt. Mit der erfindungsgemäßen digitalen Ansteuerung kann ein Antrieb auf mindestens 0,1 ° genau oder noch genauer positioniert werden, so dass damit geringste Volumenstromänderungen realisiert werden können. Damit kann das erfindungsgemäße System auch bei Anwendungen mit sehr hohen Anforderungen an die Stellgenauigkeit und die Regelgenauigkeit, wie z. B. in Reinräumen, eingesetzt werden.

Die digitale Ansteuerung ist im Gegensatz zu einer herkömmlichen Verbindung mittels analoger Signale auch störungsunanfälliger, d. h. beispielsweise keine Einstreuungen, Spanungsverschleppungen, Leitungsverluste, so dass auch über größere Strecken verlustfrei die digitalen Informationen übertragen werden können. Ein weiterer Vorteil besteht darin, dass der Antrieb seinerseits Informationen in Form von digitalen Signalen beispielsweise an den Regler aussenden kann. Diese Informationen können beispielsweise die aktuelle Position oder den Zustand des Antriebs betreffen. Bei den an den Regler ausgesandten Informationen kann es sich beispielsweise auch um die Verstellgeschwindigkeit des Antriebs handeln. Entsprechende Informationen können auch Rückmeldungen an den Regler über Stellzyklen betreffen, so dass beispielsweise ein Austausch des Antriebs vor einem drohenden Ausfall oder eine vorausschauende Wartung möglich ist.

Sofern es sich um einen Regler zur Anwendung in einem Laborraum handelt, kann der Regler als Laborabzugsregler, als Zuluftregler oder als Abluftregler eingesetzt sein. Bei Verwendung in einem Laborraum kann er auch zur Raumdruckregelung eingesetzt werden. Dient der Regler zur Anwendung in einem Reinraum, übernimmt der Regler die Funktion eines Zuluftreglers oder eines Abluftreglers einschließlich der Funktion der Raumdruckregelung.

Zumindest ein Steuergerät und/oder zumindest ein Regler und wenigstens ein mit diesem Steuergerät und/oder mit diesem Regler verbundener Antrieb können in jeweils separaten Gehäusen angeordnet sein, und die Koppelung zwischen diesem Steuergerät und/oder diesem Regler einerseits und dem vorgenannten, hiervon digital angesteuerten Antrieb andererseits kann durch eine für die digitale Datenübertragung geeignete Leitungsverbindung oder durch eine Funkstrecke ausgebildet sein. Bei der Leitungsverbindung kann es sich beispielsweise um ein Stromkabel oder um einen Lichtleiter handeln.

Die Gehäuse können voneinander getrennt angeordnet sein. Dann sind sie in einem Abstand zueinander angeordnet und damit nicht in einer größeren Einheit zusammengefasst. Bei einer solchen Ausgestaltung können die einzelnen Gehäuse an unterschiedlichen Orten montiert werden, so dass das System optimal an die bauseitigen Gegebenheiten angepasst werden kann. Damit kann jeder Antrieb separat vom Regler montiert werden, so dass das System an verschiedene bauseitig bestehende Einbausituationen angepasst werden kann. So muss lediglich die gewünschte Länge der Leitungsverbindung gewählt werden, um den Regler und den (die) Antrieb(e) zu verbinden. Ein weiterer Vorteil ist, dass das System noch vor Ort zusammengestellt werden kann. So kann aufgrund der separaten Ausgestaltung beispielsweise die für diesen Anwendungsfall geeignetste Antriebsvariante, beispielsweise hinsichtlich des Drehmomentes oder der Drehgeschwindigkeit (Schnell- oder Langsamläufer) gewählt werden. Auch kann als Antrieb ein Antrieb mit Notstellfunktion ausgewählt werden. Bei einem Antrieb mit Notstellfunktion wird bei einem Spannungsausfall durch eine zuvor aufgespannte Feder der Antrieb in seine ursprüngliche Stellung verlagert. Die ursprüngliche Stellung des Antriebs entspricht üblicherweise der Schließstellung der Drosselklappe.

Zumindest eine Leitungsverbindung kann für die digitale Kommunikation als Lichtwellenleiter ausgebildet sein.

Zumindest eine Ausgangs- und/oder Eingangs-Schnittstelle und/oder zumindest eine Eingangs- und/oder Ausgangs-Schnittstelle kann (können) als 1 oder Mehr-Drahtleitung ausgebildet sein.

Dabei kann (können) zumindest eine Ausgangs- und/oder Eingangs-Schnittstelle und/oder zumindest eine Eingangs- und/oder Ausgangs-Schnittstelle als RS-485-Schnittstelle oder als RS-232-Schnittstelle ausgebildet sein. Diese Schnittstellen-Standards erlauben eine digitale, serielle Datenübertragung. Auch andere digitale Schnittstellen, wie beispielsweise Ethernet oder dergleichen, sind selbstverständlich möglich.

Es bietet sich an, wenn zumindest eine Leitungsverbindung als Bus ausgebildet ist und Teil eines Bus-Leitungsnetzes ist. Als Kommunikationsprotokoll kann beispielsweise Modbus, CAN-Bus, Profibus, BACnet verwendet werden, wobei selbstverständlich auch ein properitäres Bus-Protokoll zum Datenaustausch verwendet werden kann.

Der Prozessor des Steuergerätes und/oder des Reglers und der Prozessor wenigstens eines mit diesem Steuergerät und/oder mit diesem Regler verbundenen Antriebs können so eingerichtet sein, dass als Kommunikationsprotokoll ein offenes standardisiertes Protokoll, wie zum Beispiel Modbus, ein CAN-Bus, ein Profibus, BACnet, ein properitäres Protokoll, oder dergleichen vorgesehen ist.

Die Ausgangs- und/oder Eingangs-Schnittstelle in dem Steuergerät und/oder in dem Regler, die Eingangs- und/oder Ausgangs-Schnittstelle in zumindest einem Antrieb sowie die Leitungsverbindung dazwischen können so ausgebildet sein, dass die Spannungsversorgung dieses Antriebes vorzugsweise über die gleiche Leitungsverbindung erfolgt, wobei die Ausgangs- und/oder Eingangs-Schnittstelle des Steuergerätes und/oder des Reglers ebenfalls mit einer entsprechenden Stromversorgung verbunden ist. Bei einer solchen Ausgestaltung können die digitalen Signale auf den Spannungsverlauf aufmoduliert sein.

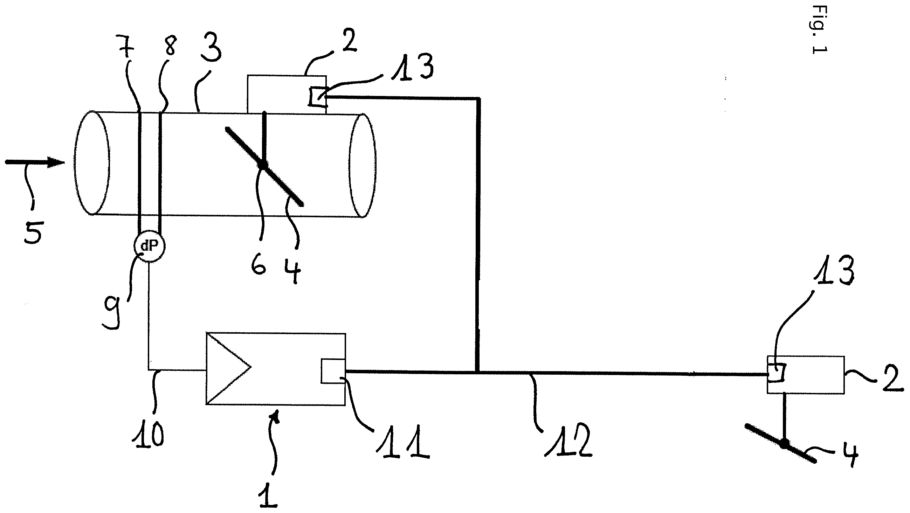

Die einzige Figur zeigt die Ausgestaltung eines erfindungsgemäßen Systems zur Regelung eines in einem Strömungskanal 3 einer lufttechnischen Anlage, wie beispielsweise einer lufttechnischen Labor- oder Reinraumanlage, strömenden Volumenstroms. Das erfindungsgemäße System weist einen elektronischen als Volumenstromregler 1 ausgebildeten Regler sowie zwei Antriebe 2 auf. Das System kann beispielsweise in einem Laborraum oder in einem Reinraum installiert sein.

Jeder der beiden Antriebe 2 ist mit einer in einem Strömungskanal 3 angeordneten Drosselklappe 4 verbunden. Mittels der Drosselklappe 4 kann der freie Strömungsquerschnitt des Strömungskanals 3 verändert werden. In der Figur ist nur zu einem der beiden Antriebe 4 der Strömungskanal 3 mit der darin um eine senkrecht zur Strömungsrichtung 5 ausgerichteten Welle 6 drehbar gelagerten Drosselklappe 4 angedeutet.

In dem Strömungskanal 3 sind in Strömungsrichtung 5 gesehen der Drosselklappe 4 vorgelagert zwei in Strömungsrichtung 5 gesehen hintereinander angeordnete Messstellen 7, 8 vorgesehen, die mit einem Differenzdrucksensor 9 verbunden sind. Alternativ oder in Ergänzung kann ein in den Strömungskanal 3 hineinragender Geschwindigkeitssensor vorgesehen sein. Der mittels des Differenzdrucksensors 9 bestimmte Differenzdruck oder die gemessene Strömungsgeschwindigkeit sind ein Maß für die Menge des in dem Strömungskanal 3 strömenden Volumenstroms. Dieser Ist-Wert wird in dem dargestellten Ausführungsbeispiel von dem Differenzdrucksensor 9 über eine Verbindung 10 an den elektronischen Volumenstromregler 1 weitergegeben.

Der elektronische Volumenstromregler 1 weist u. a. einen nicht dargestellten Mikrocomputer auf. Darin wird ein Vergleich zwischen dem hinterlegten Soll-Wert und dem bestimmten Ist-Wert vorgenommen. Im Fall einer Abweichung wird ein entsprechendes digitales Signal zur Veränderung der Stellung der Drosselklappe 4 an den entsprechenden Antrieb 2 gesandt.

Zur digitalen Ansteuerung weist der elektronische Volumenstromregler 1 eine digital kommunizierende Ausgangs- und/oder Eingangs-Schnittstelle 11 auf, die mit einer Leitungsverbindung 12 verbunden ist. Die digital kommunizierende Ausgangs- und/oder Eingangs-Schnittstelle 11 ist beispielsweise als RS-485-Schnittstelle oder RS-232-Schnittstelle ausgebildet. In dem dargestellten Ausführungsbeispiel ist die Leitungsverbindung 12 zwischen dem Volumenstromregler 1 und einem Antrieb 2 als Bus ausgebildet und Teil eines Bus-Leitungsnetzes. Die Leitungsverbindung 12 ist beispielsweise als 2 oder 3 Draht-Kommunikationsleitung ausgeführt. Das Bus-Leitungsnetz verbindet den Volumenstromregler 1 und die beiden Antriebe 2 untereinander. Nicht dargestellt ist in der Figur die Spannungsversorgung der beiden Antriebe 2.

Als Kommunikationsprotokoll für das Bus-Leitungsnetz kann beispielsweise Modbus oder auch ein herstellerspezifisches properitäres Protokoll vorgesehen sein. Ein solches Kommunikationsprotokoll eignet sich für die digitale Datenübertragung und zeichnet sich durch eine hohe Robustheit gegenüber elektromagnetischen Störungen aus. Zudem können Mechanismen zur Fehlererkennung und Korrektur implementiert werden. Hierbei kann es sich beispielsweise um eine zyklische Redundanzprüfung (cyclic redundancy check = CRC) handeln. Bei diesem Verfahren wird ein Prüfwert für Daten bestimmt, so dass eine Erkennung von Fehlern bei der Übertragung oder bei der Speicherung möglich ist. Auch andere Schnittstellen-Standards und Protokolle zum digitalen Informationsaustausch zwischen dem Volumenstromregler 1 und einem Antrieb 2, vorzugsweise beiden Antrieben 2, sind denkbar, wie beispielsweise über Lichtwellenleiter, über eine PowerLine-Kommunikation, über eine Funkstrecke oder dergleichen. Bei der PowerLine-Kommunikation werden vorhandene Stromleitungen zum Aufbau eines Netzwerks mitgenutzt, um Daten zu übertragen.

Da vorliegend das Bus-Leitungsnetz mehr als zwei Teilnehmer, nämlich vorliegend einen Volumenstromregler 1 und zwei Antriebe 2, verbindet, sind beispielsweise die von dem Prozessor des Volumenstromreglers 1 ausgesandten digitalen Signale adressiert, so dass jeder Antrieb 2 "weiß", welches Signal für ihn bestimmt ist. Selbstverständlich kann das Bus-Leitungsnetz noch eine Vielzahl an weiteren Teilnehmern in Form von lufttechnischen Komponenten, Sensoren, Aktoren oder dergleichen aufweisen.

Jeder Antrieb 2 weist seinerseits einen nicht dargestellten Mikroprozessor auf, der mit der Leitungsverbindung 12 verbunden ist. Dem Prozessor bzw. Mikroprozessor des Antriebs 2 ist eine digital kommunizierende Eingangs- und/oder Ausgangs-Schnittstelle 13 zugeordnet. Der einen Prozessor aufweisende Volumenstromregler 1 legt über seine digital kommunizierende Ausgangs- und/oder Eingangs-Schnittstelle 11 ein digitales Signal auf der als Bus ausgebildeten Leitungsverbindung 12 ab. Das digitale Signal wird über die vollständige Leitungsverbindung 12 zur digital kommunizierenden Eingangs- und/oder Ausgangs-Schnittstelle 13 des einen Prozessor aufweisenden entsprechenden Antriebs 2 weitergeleitet. Damit können im Gegensatz zu bekannten analog arbeitenden Verbindungen größere Distanzen überwunden werden, ohne dass dies einen Einfluss auf die übertragenen digitalen Signale hat, sowie mehrere Antriebe 2 von einer Steuerung/Regelung über eine beispielsweise als Kabelverbindung ausgebildete Leitungsverbindung 12 unabhängig angesteuert werden. Statt des Bus-Leitungsnetzes sind beispielsweise auch point-to-point-Verbindungen möglich.

Selbstverständlich ist auch in umgekehrter Richtung eine Übertragung von digitalen Signalen von dem Prozessor eines Antriebs 2 an den Prozessor des anderen Antriebs 2 oder an den Prozessor des Volumenstromreglers 1 möglich. Der den Prozessor aufweisende Antrieb 2 legt über seine digital kommunizierenden Ausgangs- und/oder Eingangs-Schnittstelle 13 ein digitales Signal, wie beispielsweise seine Systemdaten, auf der als Bus ausgebildeten Leitungsverbindung ab. Bei diesem Signal oder Systemdaten kann es sich beispielsweise um die aktuelle Position handeln.

Wie der Figur zu entnehmen ist, sind der Volumenstromregler 1 und die Antriebe 2 in separaten Gehäusen und voneinander getrennt angeordnet und über das Bus-Leitungsnetz miteinander verbunden. Damit können die Gehäuse örtlich voneinander getrennt montiert werden. Durch die getrennte Ausgestaltung kann noch vor Ort beispielsweise der für diese Einbausituation günstigste Antrieb 2 ausgewählt werden.

Im Ergebnis bietet das erfindungsgemäße System diverse Vorteile. Durch die digitale Kommunikation wird zunächst die Kommunikationsstabilität erhöht, da keine Spannungssignale, sondern Protokolle übertragen werden. Dies gewährleistet eine bessere Informationsübertragung.

Darüber hinaus ist eine genauere Ansteuerung eines Antriebs 2 und damit resultierend eine feinere Einstellung einer Drosselklappe 4 möglich. Zudem können bei dem erfindungsgemäßen System auch Informationen/Systemdaten über die als bidirektionale Bus-Verbindung ausgebildete Leitungsverbindung 12 zwischen einem Antrieb 2 und einem Volumenstromregler 1 ausgetauscht werden. Bei diesen Systemdaten kann es sich beispielsweise um die Antriebskennung, wie die maximale Stellzahl 90° oder eine eventuelle Notstellfunktion bei einem Feder-Kondensatorrückläufer, um die anzufahrende Position, um die Stellzyklen eines Antriebes, um die Laufzeitüberwachung, um die Stromaufnahme, um das derzeit anliegende Drehmoment, um den Status, um Fehlermeldungen oder dergleichen handeln.

## Patentansprüche

1. System zur Steuerung und/oder zur Regelung eines in einem Strömungskanal (3) einer lufttechnischen Anlage, vorzugsweise einer lufttechnischen Labor- oder Reinraumanlage, strömenden Volumenstroms durch Verstellung einer in dem Strömungskanal (3) angeordneten Drosselklappe (4), wobei das System zumindest ein elektronisches Steuergerät und/oder zumindest einen elektronischen Regler, vorzugsweise einen elektronischen Volumenstromregler (1), sowie zumindest einen über eine Leitungsverbindung (12) mit zumindest einem Steuergerät und/oder mit zumindest einem Regler verbundenen Antrieb (2) aufweist, durch den die in dem Strömungskanal (3) angeordnete Drosselklappe (4) in ihrer Ausrichtung veränderbar ist, **dadurch gekennzeichnet, dass** zumindest einem mit zumindest einem Antrieb (2) verbundenen Steuergerät und/oder zumindest einem mit zumindest einem Antrieb (2) verbundenen Regler ein Prozessor mit einer digital kommunizierenden Ausgangs- und/oder Eingangs-Schnittstelle (11) zugeordnet ist und diesem mit dem Steuergerät und/oder mit dem Regler verbundenen Antrieb (2) ein Prozessor mit einer digital kommunizierenden Eingangs- und/oder Ausgangs-Schnittstelle (13) zugeordnet ist und dass die digital kommunizierende Ausgangs- und/oder Eingangs-Schnittstelle (11) des Prozessors des Steuergeräts und/oder des Reglers und die digital kommunizierende Eingangs- und/oder Ausgangs-Schnittstelle (13) des Prozessors wenigstens eines mit dem Steuergerät und/oder mit dem Regler verbundenen Antriebs (2) für eine digitale Ansteuerung dieses Antriebs (2) über den vollständigen Übertragungsweg miteinander digital gekoppelt sind.

2. System nach dem vorhergehenden Anspruch, **dadurch gekennzeichnet, dass** zumindest ein Steuergerät und/oder zumindest ein Regler und wenigstens ein mit diesem Steuergerät und/oder mit diesem Regler verbundener Antrieb (2) in jeweils separaten Gehäusen angeordnet sind und dass die Koppelung zwischen diesem Steuergerät und/oder diesem Regler einerseits und dem vorgenannten, hiervon digital angesteuerten Antrieb (2) andererseits durch eine für die digitale Datenübertragung geeignete Leitungsverbindung (12) oder durch eine Funkstrecke ausgebildet ist.

3. System nach dem vorhergehenden Anspruch, **dadurch gekennzeichnet, dass** die Gehäuse voneinander getrennt angeordnet sind.

4. System nach einem der vorhergehenden Ansprüche, **dadurch gekennzeichnet, dass** zumindest eine Leitungsverbindung (12) als Lichtwellenleiter ausgebildet ist.

5. System nach einem der vorhergehenden Ansprüche, **dadurch gekennzeichnet, dass** zumindest eine Ausgangs- und/oder Eingangs-Schnittstelle (11) und/oder zumindest eine Eingangs- und/oder Ausgangs-Schnittstelle (13) als 1 oder Mehr-Drahtleitung ausgebildet ist.

6. System nach einem der vorhergehenden Ansprüche, **dadurch gekennzeichnet, dass** zumindest eine Ausgangs- und/oder Eingangs-Schnittstelle (11) und/oder zumindest eine Eingangs- und/oder Ausgangs-Schnittstelle (13) als RS-485-Schnittstelle ausgebildet ist.

7. System nach einem der vorhergehenden Ansprüche, **dadurch gekennzeichnet, dass** zumindest eine Ausgangs- und/oder Eingangs-Schnittstelle (11) und/oder zumindest eine Eingangs- und/oder Ausgangs-Schnittstelle (13) als RS-232-Schnittstelle ausgebildet ist.

8. System nach einem der vorhergehenden Ansprüche, **dadurch gekennzeichnet, dass** zumindest eine Leitungsverbindung (12) als Bus ausgebildet ist und Teil eines Bus-Leitungsnetzes ist.

9. System nach dem vorhergehenden Anspruch, **dadurch gekennzeichnet, dass** der Prozessor des Steuergeräts und/oder des Reglers und der Prozessor wenigstens eines mit diesem Steuergerät und/oder mit diesem Regler verbundenen Antriebs (2) so eingerichtet sind, dass als Kommunikationsprotokoll ein offenes standardisiertes Protokoll, wie zum Beispiel ein Modbus, ein CAN-Bus, ein Profibus, oder ein properitäres Protokoll vorgesehen ist.

10. System nach einem der vorhergehenden Ansprüche, **dadurch gekennzeichnet, dass** die Ausgangs- und/oder Eingangs-Schnittstelle (11) in dem Steuergerät und/oder in dem Regler, die Eingangs- und/oder Ausgangs-Schnittstelle (13) in zumindest einem Antrieb (2) sowie die Leitungsverbindung (12) dazwischen so ausgebildet sind, dass die Spannungsversorgung dieses Antriebes (2) vorzugsweise über die Leitungsverbindung (12) erfolgt, wobei die Ausgangs- und/oder Eingangs-Schnittstelle (11) des Steuergeräts und/oder des Reglers ebenfalls mit einer entsprechenden Stromversorgung verbunden ist.

## Claims

1. System for controlling ad/or regulating a volume flow flowing in a flow channel (3) of a ventilation system, preferably a ventilation laboratory or clean room system, by adjustment of a throttle valve (4) arranged in the flow channel (3), wherein the system comprises at least one electronic control device and/or at least one electronic regulator, preferably an electronic volume flow regulator (1), as well as at least one drive (2), connected by means of a line connection (12) to at least one control device and/or to at least one regulator, by means of which the throttle valve (4) arranged in the flow channel (3) can be changed in its alignment, **characterised in that** a processor with a digitally communicating output and/or input interface (11) is assigned to at least one control device connected to at least one drive (2) and/or to at least one regulator connected to at least one drive (2), and a processor with a digitally communicating output and/or input interface (13) is assigned to this drive (2) connected to the control device and/or to the regulator, and that the digitally communicating output and/or input interface (11) of the processor of the control device and/or of the regulator and the digitally communicating output and/or input interface (13) of the processor of at least one drive (2) connected to the control device and/or the regulator are digitally coupled to one another for a digital actuation of this drive (2) over the entire transfer path.

2. System according to the preceding claim, **characterised in that** at least one control device and/or at least one regulator and at least one drive (2) connected to this control device and/or this regulator are arranged in each case in a separate housing, and that the coupling between this control device and/or this regulator on the one hand, and the said drive (2), digitally actuated by them, on the other, is formed by a line connection (12) suitable for digital data transfer or by a radio link.

3. System according to the preceding claim, **characterised in that** the housings are arranged separated from one another.

4. System according to any one of the preceding claims, **characterised in that** at least line connection (12) is configured as an optical waveguide.

5. System according to any one of the preceding claims, **characterised in that** at least one output and/or input interface (11) and/or at least one input and/or output interface (13) is configured as a one-wire or multi-wire line.

6. System according to any one of the preceding claims, **characterised in that** at least one output and/or input interface (11) and/or at least one input and/or output interface (13) is configured as an RS-485 interface.

7. System according to any one of the preceding claims, **characterised in that** at least one output and/or input interface (11) and/or at least one input and/or output interface (13) is configured as an RS-232 interface.

8. System according to any one of the preceding claims, **characterised in that** at least line connection (12) is configured as a bus, and is part of a bus line network.

9. System according to any one of the preceding claims, **characterised in that** the processor of the control device and/or of the regulator and the processor of at least one drive (2) connected to this control device and/or to this regulator are arranged in such a way that provided as the communication protocol is an open standardised protocol, such as a Modbus, a CAN bus, a Profibus, or a proprietary protocol.

10. System according to any one of the preceding claims, **characterised in that** the output and/or input interface (11) in the control device and/or in the regulator, the input and/or output interface (13) in at least one drive (2), and the line connection (12) between them are configured in such a way that the voltage supply of this drive (2) is preferably provided via the line connection (12), wherein the output and/or input interface (11) of the control device and/or of the regulator is likewise connected to a corresponding current supply.

## Revendications

1. Système de commande et/ou de régulation d'un débit s'écoulant dans un canal d'écoulement (3) d'une installation aéraulique, de préférence d'une installation aéraulique de laboratoire ou de salle blanche, par réglage d'un papillon (4) disposé dans le canal d'écoulement (3), le système comportant au moins un dispositif de commande électronique et/ou au moins un régulateur électronique, de préférence un régulateur électronique de débit (1), ainsi qu'au moins une unité d'entraînement (2) reliée par une liaison par câble (12) à au moins un dispositif de commande et/ou à au moins un régulateur, au moyen de laquelle l'orientation du papillon (4) disposé dans le canal d'écoulement (3) peut être modifiée, **caractérisé en ce qu'**un processeur avec une interface de sortie et/ou d'entrée (11) communiquant numériquement est associé à au moins un dispositif de commande relié à au moins une unité d'entraînement (2) et/ou à au moins un régulateur relié à au moins une unité d'entraînement (2) et un processeur avec une interface d'entrée et/ou de sortie (13) communiquant numériquement est associé à cette unité d'entraînement (2) reliée au dispositif de commande et/ou au régulateur, et que l'interface de sortie et/ou d'entrée (11) communiquant numériquement du processeur du dispositif de commande et/ou du régulateur et l'interface d'entrée et/ou de sortie (13) communiquant numériquement du processeur d'au moins une unité d'entraînement (2) reliée au dispositif de commande et/ou au régulateur sont couplées numériquement l'une à l'autre sur tout le trajet de transmission pour une commande numérique de cette unité d'entraînement (2).

2. Système selon la revendication précédente, **caractérisé en ce qu'**au moins un dispositif de commande et/ou au moins un régulateur et au moins une unité d'entraînement (2) reliée à ce dispositif de commande et/ou à ce régulateur sont disposés dans des boîtiers séparés respectifs et que le couplage entre ce dispositif de commande et/ou ce régulateur d'une part et l'unité d'entraînement (2) précitée, commandée numériquement par ceux-ci d'autre part, est formé par une liaison par câble (12) appropriée pour la transmission de données numériques ou par une liaison radio.

3. Système selon la revendication précédente, **caractérisé en ce que** les boîtiers sont disposés séparément les uns des autres.

4. Système selon l'une des revendications précédentes, **caractérisé en ce qu'**au moins une liaison par câble (12) est réalisée sous la forme d'un câble à fibres optiques.

5. Système selon l'une des revendications précédentes, **caractérisé en ce qu'**au moins une interface de sortie et/ou d'entrée (11) et/ou au moins une interface d'entrée et/ou de sortie (13) sont réalisées sous la forme d'un câble à un ou plusieurs fils.

6. Système selon l'une des revendications précédentes, **caractérisé en ce qu'**au moins une interface de sortie et/ou d'entrée (11) et/ou au moins une interface d'entrée et/ou de sortie (13) sont réalisées sous la forme d'une interface RS-485.

7. Système selon l'une des revendications précédentes, **caractérisé en ce qu'**au moins une interface de sortie et/ou d'entrée (11) et/ou au moins une interface d'entrée et/ou de sortie (13) sont réalisées sous la forme d'une interface RS-232.

8. Système selon l'une des revendications précédentes, **caractérisé en ce qu'**au moins une liaison par câble (12) est réalisée sous la forme d'un bus et fait partie d'un réseau de lignes de bus.

9. Système selon la revendication précédente, **caractérisé en ce que** le processeur du dispositif de commande et/ou du régulateur et le processeur d'au moins une unité d'entraînement (2) reliée à ce dispositif de commande et/ou à ce régulateur sont conçus de telle sorte qu'un protocole normalisé ouvert, tel qu'un Modbus, un bus CAN, un Profibus, ou un protocole propriétaire est prévu comme protocole de communication.

10. Système selon l'une des revendications précédentes, **caractérisé en ce que** l'interface de sortie et/ou d'entrée (11) dans le dispositif de commande et/ou dans le régulateur, l'interface d'entrée et/ou de sortie (13) dans au moins une unité d'entraînement (2) ainsi que la liaison par câble (12) entre elles sont conçues de telle sorte que l'alimentation en tension de cette unité d'entraînement (2) s'effectue de préférence via la liaison par câble (12), l'interface de sortie et/ou d'entrée (11) du dispositif de commande et/ou du régulateur étant également reliée à une alimentation en courant correspondante.
